# EUROPÄISCHE PATENTSCHRIFT

(11) **EP 2 084 937 B1**
(45) Veröffentlichungstag und Bekanntmachung des Hinweises auf die Patenterteilung: **13.03.2013**
(21) Anmeldenummer: 07817647.6
(22) Anmeldetag: 10.10.2007
(51) Int. Cl.: H04R 5/027, H04R 5/033, H04M 1/60, H04M 3/56

(54) **VERFAHREN UND VORRICHTUNG ZUR AUFNAHME, ÜBERTRAGUNG UND WIEDERGABE VON SCHALLEREIGNISSEN FÜR KOMMUNIKATIONSANWENDUNGEN**
METHOD AND APPARATUS FOR RECORDING, TRANSMITTING, AND PLAYING BACK SOUND EVENTS FOR COMMUNICATION APPLICATIONS
PROCÉDÉ ET DISPOSITIF DESTINÉS À ENREGISTRER, TRANSMETTRE ET RESTITUER DES ÉVÉNEMENTS SONORES POUR DES APPLICATIONS DE COMMUNICATION

(30) Priorität: 12.10.2006 DE 102006048295
(43) Veröffentlichungstag der Anmeldung: 05.08.2009
(73) Patentinhaber: Pavel, Andreas Max, 6900 Lugano (CH)
(72) Erfinder: Pavel, Andreas Max, 6900 Lugano (CH)
(74) Vertreter: Jakelski, Joachim
(86) Internationale Anmeldenummer: PCT/DE2007/001805
(87) Internationale Veröffentlichungsnummer: WO 2008/043349

(56) Entgegenhaltungen:
- WO-A-98/42161
- WO-A-99/53673
- DE-A1- 3 303 418
- DE-A1- 3 737 873
- DE-A1- 10 020 857
- DE-C1- 3 930 278
- GB-A- 2 416 955
- JP-A- 6 268 722
- JP-A- 2004 023 535
- US-B1- 6 408 327

## Beschreibung

### Stand der Technik

Die Erfindung betrifft ein Verfahren nach dem Oberbegriff des Anspruchs 1 sowie eine Vorrichtung nach dem Oberbegriff des Anspruchs 7.

Auf dem Gebiet der stereophonen Fernübermittlung von Schallereignissen sind im Bereich der Rundfunk- und Studio-Technik stereophon ausgelegte, echtzeitfähige Voll-Duplex-Übertragungswege in hoher Qualität bekannt, die jedoch an ortsfeste Netzübergabepunkte gebunden sind. Zudem sind entsprechend hochwertige kurzreichweitige drahtlose Punkt-zu-Punkt-Verbindungen bekannt, die hauptsächlich für Rundfunk-Interviews im Außenbereich eingesetzt werden.

Auf dem Gebiet telefonischer Konferenz-Schaltungen ist andererseits schon eine Vielzahl von Vorschlägen bekannt, die Telefonverbindung, sowohl zur besseren Identifizierung des oder der jeweiligen Gesprächsteilnehmer(s) oder auch zur Verbesserung des Sprachverständlichkeit entweder stereophon auszulegen, zu übertragen und wiederzugeben oder doch jedenfalls nach Art einer Panorama-Mischung jeweils monaural aufgenommene Einzelquellen (Sprecher) an eine bestimmte Stelle im Stereo-Panorama zu positionieren.

Weder die heutigen Techniken stereophoner Übertragung im Rundfunk- und Studiobereich noch die bestehenden Vorschläge für eine stereophone Auslegung von Konferenzschaltungen betreffen den Kernbereich der vorliegenden Erfindung - nämlich der vorzugsweise mobilen Übertragung persönlicher, also auf den jeweiligen Sprecher bezogener Hörbilder in Echtzeit, ein Gebiet, welches auch in dieser Aufgabenstellung neu ist. Zum besseren Verständnis erscheint es gerechtfertigt, bereits an dieser Stelle darauf hinzuweisen, dass unter dem Begriff eines persönlichen Hörbildes die akustische Umgebung zu verstehen ist, so wie sie der jeweilige Sprecher auch selbst im Moment des Telefonierens binaural, also mit seinen beiden Ohren und unter Einbeziehung des auf seinen Kopf bezogenen bzw. durch diesen hervorgerufenen Reflexions-, Beugungs- und Resonanzverhaltens wahrnimmt.

Dabei kann in dem noch am ehesten vergleichbaren Stand der Technik auf die folgenden Veröffentlichungen beispielhaft verwiesen werden: JP 06 268722 A, DE 33 03 418 A1, GB 2 416 955 A, DE 39 30 278 C1, DE 100 20 857 A1, WO 99/53673 A,WO 98/42161 A, DE 37 37 873 A1, JP 2004 023535 A, US 4 088 849 A, EP 0 724 352 A2, DE 40 41 319 A1, EP 0 358 028 A2, JP 02217100 A, DE 100 20 857 A1.

Ein Beispiel für eine durchaus hochwertige stereophone Aufnahme, Übertragung und Wiedergabe von Schallereignissen für Kommunikationsanwenduugen in der Telefonie zeigt die JP 06 268722 A, bei der an eine zentrale Übertragungseinrichtung über allerdings nur jeweils eine einzige Verbindungsleitung stereophon arbeitenden Teilnehmertelefone angeschlossen sind. Jedes Teilnehmertelefon verfügt über ein Paar Kopfhörer und zwei Mikrophone, nämlich ein linkes und ein rechtes Mikrophon. Die Übertragung der stereophon gewonnenen Signale an jeden Teilnehmer erfolgt über die Telefonverbindungsleitung im Zeitmultiplexverfahren, was eine spätere Aufspaltung und Aufbereitung des einen übertragenen Signals, üblicherweise aus nicht vollständig zeitsynchronen Impulspaketen bestehend, in ein linkes und rechtes Kopfhörersignal erforderlich macht.

Diese im Grunde relativ aufwendige Anordnung dient der telefonischen Realisierung einer speziell in Japan beliebten gesellschaftlichen Unterhaltung, nämlich des so genannten Karaoke-Phänomens. Von Bedeutung ist in diesem Zusammenhang, dass dem jeweiligen Teilnehmer dabei von einer an die zentrale Übertragungseinrichtung (Netz) ebenfalls angeschlossenen, eine für Karaoke geeignete hochwertige Musikdarbietung erzeugenden Zusatzschaltung die Musikdarbietung dessen Kopfhörern zugeführt wird. Der Teilnehmer singt dann dazu. Zu diesem Zweck, also zur Aufnahme und wohl auch Übertragung der Gesangsstimme sind die beiden Mikrophone vorgesehen, die sich deshalb auch eng nebeneinander stehend direkt vor dem Mund des Sprechers/Sängers und fernab zu den Kopthörern befinden. Die Darstellung der Fig. 3 der JP 06 268722 A zeigt deutlich, was gemeint ist, damit die Gesangstimme auch präzise aufgenommen werden kann. Die Kopfhörer sind offensichtlich über ein übliches wohl federndes Klemmband/Hörerband miteinander verbunden und liegen an den Ohren an. Die Mikrophone befinden sich entfernt zu den Kopfhörern und sind direkt vor dem Mund des Sängers angeordnet, in Fig. 3 gut erkennbar, wenn man bei dieser Anordnung den Kopf des Sängers mit einbezieht. Sie liegen jeweils nicht im Ohrbereich, sondern von diesem entfernt, was verständlich ist, da in der Schrift angegeben ist, dass die beiden kleinen Mikrophone dazu bestimmt sind, den Gesang des Sprechers in stereophoner Form aufzunehmen, was immer dies auch bedeuten soll; denn eine stereophone Aufnahme einer Gesangstimme mit zwei direkt links und rechts vor dem Mund einer singenden Person angeordneten Mikrophonen hat wenig Sinn, da beide Mikrophone praktisch genau das Gleiche aufnehmen. Eine solche Anordnung ermöglicht nicht die Übertragung eines persönlichen Hörbildes, sie ist auf die Erreichung eines anderen Ziels gerichtet.

Das Dokument DE 33 03 418 A1 betrifft eine Sprechhilfe für Stotterer. Eine Stereotelefonie oder eine entsprechende Ausrüstung für diese gehen aus diesem Dokument nicht hervor. Bei Stotterern ist es offensichtlich üblich, zur Sprachverbesserung diesen über sehr laut eingestellte Kopfhörer ein sogenanntes Maskierungsgeräusch in Form eines in diesem Fall auf 300 Hz beschnittenen weißen Rauschens zuzuführen, wobei offene oder geschlossene Kopthörer verwendet werden können. Da aber bei den bevorzugt verwendeten geschlossenen Kopfhörern die Stimme des Stotterers selbst nur stark gedämpft von außen an sein eigenes Ohr gelangt, er also wegen der Abschirmwirkung geschlossener Kopfhörer gegenüber äußeren Umgebungsgeräuschen sich selbst nur sehr schlecht hören kann, was andererseits für eine Heilbehandlung aber unerlässlich ist, schlägt diese Schrift vor, ein oder mehrere Mikrophone im Bereich der Kopfhörer anzubringen und so eine mono- oder stereophone Schallübertragung von diesen Mikrophonen direkt zu den Kopfhörern zu ermöglichen, an denen sie angebracht sind. Diese Durchhörvorrichtung entspricht im Wesentlichen der Anordnung von Hörhilfen. Die für die Übermittlung eines persönlichen Hörbildes erforderliche zwei Übertragungskanäle sind nicht offenbart. Es ist zwar ein Telefonadapter vorgesehen; ein entsprechender Telefonverkehr verläuft jedoch ohne stereophone Ausgestaltung, da der Adapter (s. die Zeichnung) lediglich ein monaurales Signal direkt von einem Mundmikrophon über einen Vorverstärker zugeführt erhält und seinerseits das Monosignal den jeweiligen Verstärkern der beiden Kopfhörer zuführt. Die Leitung verzweigt sich einfach hinter dem Adapter, damit beide Kopfhörer beaufschlagt werden können. Bezüge zur vorliegenden Erfindung sind nicht zu erkennen, da lediglich ein für Stotterer relevantes Problem unter Zuhilfenahme einer Durchhörvornchtung gelöst wird.

Das Dokument entsprechend GB 2 416 955 A betrifft keine stereophone Telefonie, sondern schlägt - hier vergleichbar mit dem Dokument DE 37 37 873 A1, auf welches später noch eingegangen wird - bei Konferenzschaltungen die Möglichkeit einer räumlichen Zuordnung der am Gespräch teilnehmenden Personen mit Hilfe eines "Raumbestimmungs-Prozessors" (spatial processors) vor. Dabei werden eingehende Sprachkomponenten der Konferenzteilnehmer von einem Detektor so codiert, dass diese zusätzlich eine Ortsbestimmung enthalten bzw. eine räumliche Zuordnung durch die hörende(n) Person(en) ermöglichen. In keinem der in dieser Schrift gezeigten Ausführungsbeispiele wird binaural aufgenommen, es sind nur "mono outgoing channels" vorhanden; der bei den Hörern jeweils erzeugte Stereoeindruck - besser Ortungseindruck - wird mittels des "spatial processors" und darüber hinaus über Lautsprecher erzeugt.

Das Dokument entsprechend DE 39 30 278 C1 betrifft eine stereo-telefonische Ausführungform mit Wiedergabe ausschließlich über Lautsprecher, so dass eine evt. gewünschte Mobilität der Fernsprechteilnehmer schon aufgrund dieses Umstandes nicht möglich ist. Nicht angegeben ist, wo sich die Mikrophone befinden, keinesfalls ist eine Zuordnung zu Kopfhörern möglich, da es keine Kopfhörer gibt. Genauer eingegangen wird auf das Problem, dass man für Stereo üblicherweise zwei Übertragungskanäle benötigt, wobei der eine evt. auch länger als der andere sein kann oder später zugeschaltet wird, so dass man mit Zeitverzögeruugen, also Laufzeitunterschieden zwischen den beiden zu einer Stereoverbindung gehörenden Signalen rechnen muss, diese jedenfalls nicht ausschließen kann. Zur Abhilfe sind Register vorgesehen, die ein früheres Signal so lange speichern, bis, festgestellt durch Synchronisierungsimpulse, beide Nutzdatenkanäle zeitgleich ausgewertet werden können.

Die DE 100 20 857 A1 befasst sich mit der Anwendung einer stereophonen Simulation für eine mobile Telekommunikationseinheit in Verbindung mit einem Microrecordplayer, also einem mobilen Telefon mit MP3-Player. Bei diesem sind naturgemäß für den hier üblicherweise hochwertigen stereophonen Musikgenuss entsprechende Kopf- oder Ohrhörer vorgesehen, ferner mindestens ein, vorzugsweise mehrere Mikrophone, die in einer so bezeichneten Kopf-/Ohrmuschel-Beschallungs-/Aufspanneinrichtung, nämlich einem so genannten Headset angeordnet sind. Das Headset ist von der Mobiltelefoneinheit getrennt und mit dieser kabellos verbunden. Es ist diese kabellose Verbindung, die je Übertragungsrichtung eine notwendigerweise stereophone/zweikanalige Analog-Digital- sowie eine Digital-Analog-Wandlung beinhaltet. Diese Anordnungen betreffen die bei mobilen Telefonen umfassend bekannten kabellosen so genannten "Bluetooth" -Verbindungsmittel zwischen dem eigentlichen Gerät und den Kopfhörern und Mikrophon am Headset. Ein wesentliches Moment bei solchen mobilen Telefoneinheiten mit MP3-Player sieht die DE 100 20 857 A1 erkennbar in der Kombination eines solchen MP3-Handys mit elektromagnetischen Schirmungsmitteln, um bei als zu hoch angesehenen Feldstärken biologische Wirkungs-/Stressmomente zu bändigen. Hierzu wird vorgeschlagen, in aus Eisen-/Kupferblechen geschichtete Rohrsysteme Natur belassenen Quarzsand bzw. Rosenquarz, seinerseits wieder eingebracht in länglichen Kupfer-/Kunststoff-Rohren, anzuordnen, wodurch hinsichtlich der Körperreaktionen die Stresswirkungen bzw. Stressreaktionen von "Elektrosmog" reduziert werden sollen. Dieser DE 100 20 857 A1 lassen sich eindeutige Anweisungen zu technischem Handeln nicht immer mit der erforderlichen wünschenswerten Klarheit entnehmen, wesentlich ist aber, dass echte stereophonische Übertragungsmaßnahmen in der ferntelefonischen Übermittlung nicht ins Auge gefasst sind, sondern lediglich im Übertragungsbereich zwischen Bluetooth-Gerät und Hör-Sprechgarnitur auftreten. Erkennbar wird das z.B. aus dem Hinweis in Spalte 2, Z. 54-59, wonach zur Ton-Wiedergabe gelangende Sprach-/Audio-Wechselsignale individuell binauralrichtungsgefiltert in wählbar unterschiedlichen Hörrichtungen abgemischt sind. Diese Richtungsfilterung verwendet geeignete Hochpass-/Tiefpass- und dgl. Filter zur Hörrichtungseinstellung entsprechend dem weiter unten noch besprochenen Dokument DE 37 37 873 C2; auch im Sinne der Wählbarkeit, während bei echten binauralen Aufnahmen ist natürlich eine Richtungswählbarkeit der jeweiligen Schallquelle ausgeschlossen und auch gar nicht beabsichtigt ist.

Das Dokument WO 99/53673 stellt ein vergleichsweise kompliziertes Telefonkonferenzsystem dar, wobei für die Identifikation der Sprecher wieder Raumbestimmungs-Prozessoren vorgesehen sind, ferner sogenannte Konzentratoren, die die jeweils aktiven Kanäle erfassen und über Multi-Channel-Verbindungen weiterschalten. Bei dem Dokument entsprechend WO 98/42161 A2 erfolgt die telefonische Übertragung eines dreidimensionalen Klanggeschehens dadurch, dass vor dem oder den Teilnehmer(n) - in Verbindung mit einem Personalcomputer - feststehend zwei Mikrophone im Abstand zueinander angeordnet sind, wobei der Abstand in etwa der Breite eines menschlichen Kopfes entspricht. Bevorzugt sind die Mikrophone in künstlichen Ohrformen angeordnet, wie überhaupt das ganze Arrangement einem Kunstkopf ähneln oder zumindest dem Prinzip der sog. Trennkörper-Stereophonie entsprechen soll. Zur Wiedergabe der auf diese Weise von der jeweiligen Gegenseite empfangenen, stereophonen Signale sind zueinander ebenfalls im Abstand beidseitig angeordnete und insofern den Aufbau komplettierende Lautsprecher vorgesehen. Ferner wird eine Vielzahl spezieller Schaltungen zur Filterung, Kompression, Datenreduktion und unter Umständen Überkreuz-Kompensation angewandt, insbesondere um die speziellen Verfälschungen auszugleichen, die sich ergeben, wenn das Signal von einer Kunstkopf-Konstruktion bzw. Trennkörper-Mikrophonanordnung zunächst aufgenommen wird und anschließend über Lautsprecher zum jeweiligen Hörer gelangt.

Die Einrichtung nach dieser WO 98/42161 A2 ist dem Grunde nach als teilnehmerneutral zu bezeichnen, sie stellt also nicht auf eine subjektive Personengebundenheit ab, wie dies im übrigen die nachfolgend noch im einzelnen zu erläuternde Erfindung anstrebt, die auf den einzelnen Gesprächsteilnehmer bezogen dessen subjektives, also persönliches Hörbild entsprechend seiner, sich durchaus auch ändernder akustischer Umgebung überträgt. Bei der WO 98/42161 A2 wird dagegen die akustische Umgebung stets nur aus der immer gleich bleibenden Perspektive übertragen, die der starr montierte Kunstkopf empfangen kann: insofern verhält sich diese bekannte Einrichtung neutral zu allen am akustischen Geschehen teilnehmenden Personen. Dies mag bei einer Konferenzschaltung erwünscht sein, da sich so die einzelnen Teilnehmer sozusagen orten lassen und so bei der Aufnahme des Kunstkopf-Umfeldes eine persönliche Identifizierung unter der Voraussetzung, dass sich niemand während des Gespräches bewegt, möglich wird. Lediglich ergänzend erwähnt die WO 98/42161 A2 auch Kopfhörer zur Wiedergabe der übertragenen Schallereignisse, wo durch die Ortung der einzelnen Gesprächsteilnehmer weiter verbessert werden kann. Bei einer Gruppe von Abhörern am selben Ort wird deren Kommunikation untereinander allerdings gleichzeitig erschwert.

In ihrer Grundkonzeption und gerade auch von ihrer Aufgabenstellung her führt die vorliegende Erfindung gleich in mehrfacher Weise von der in WO 98/42161 A2 offenbarten Anordnung weg bzw. sie geht in die entgegengesetzte Richtung:
1) ermöglicht die der Erfindung zu Grunde liegende personenbezogene Perspektive mit den für sie typischen Kopf- und Körperbewegungen nicht die gleich bleibende Positionierung eventueller Gesprächspartner aus dem räumlichen Umfeld,
2) würde wiedergabeseitig die Stimme eines im Aufnahmemodus befindlichen Trägers einer auf der Erfindung basierenden Anordnung in jedem Fall außerhalb einer bei ihm eventuell vorhandenen Gesprächsrunde wahrgenommen, und zwar mitten im Kopf des ortsfernen Teilnehmers (Im-Kopf-Lokalisation).
   Beides widerspricht dem Ziel der WO 98/42161 A2, eine möglichst stabile und geordnete räumliche Verteilung einer Tischrunde aus der Perspektive eines neutralen, nicht an der Gesprächsrunde teilnehmenden Dritten zu gewährleisten. Zudem wäre
3) die körpergebundene, batteriebetriebene Anordnung der technischen Mittel entsprechend Merkmalen der vorliegenden Erfindung für den Gegenstand der WO 98/42161 A2 nicht nur unnötig, sondern sogar ihrem Zweck zuwiderlaufend, gerade weil diese die räumliche Verteilung eines ortsfesten Gesprächs als fest installierte Konferenzraumanlage erfassen soll.

Um bei binauralen Aufzeichnungen, insbesondere in freier Umgebung, nicht einen der üblichen Kunstköpfe mit herumtragen zu müssen, wird in dem Dokument entsprechend der US 4 088 849 A der Kopf des Trägers selbst für die Aufzeichnung eingesetzt, indem außen an einem von der aufnehmenden Person getragenem Kopfhörerpaar - die Kopfhöhe sind, wie üblich, über einen elastischen Spannbügel miteinander verbunden - künstliche Ohrsimulationsformen angebaut sind, die Mikrophone aufnehmen. Die aufgenommenen Signale werden einem Bandgerät zugeführt, die Kopfhörer dienen so der gleichzeitigen Kontrolle der aufgezeichneten Schallereignisse. Der Träger ist dabei also sein eigener "Kunstkopf", mit äußeren Simulationsohren. Hinweise auf eine Fernübertragung von Signale sind nicht erkennbar.

Eine andere Möglichkeit zur Identifizierung von Teilnehmern bei einer telefonischen Konferenzschaltung, bei der eine stereophone Signalübermittlung allerdings keine Berücksichtigung findet, zeigt die EP 0 724 352 A2. Eine digitale Fernmeldevermittlungseinrichtung enthält eine Tabelleneinheit mit Identifikationsdaten aller Teilnehmer. Wer am lautesten spricht, wird automatisch durchgeschaltet und es wird eine entsprechende Identifikation an den Apparaten der anderen Teilnehmer geschaltet, die auf die sprechende Person hinweist.

In einem anderen Zusammenhang, nämlich bei einem System zu Video- und Audiokommunikation, etwa für den Fernunterricht über Satelliten, ist für sich gesehen ebenfalls schon eine willkürlich betätigbare Mikrophonumschaltung bekannt, s. Dokument DE 40 41 319 A1.

Um bei einer stereophonen Fernübertragung von Schallereignissen eine bessere Spracherkennung zu erreichen, ist es auch schon bekannt (JP 02217 100 A), ein zusätzliches mittleres Stützmikrophon zur Sprachbeimischung vorzusehen, das dann zugeschaltet wird, wenn die Stimme des Sprechers einen vorgegebenen Schwellenwert überschreitet.

Zur Erhöhung der Informationsqualität von Kommunikationsanwendungen sei schließlich auf die Möglichkeit verwiesen, eine binaurale Übertragung sozusagen lediglich zu simulieren (DE 37 37 873 C2), indem die beiden einer hörenden Person über Kopf- oder Ohrhörer zugeführten binauralen Signale unter Zugrundelegung spezieller Filter (z.B. Hochpässe, Tiefpässe, Laufzeitglieder, Allpässe u.dgl.) aus verschiedenen Monosignalen bestehen, die ergänzend mit einer Abstandsinformation und insbesondere einer Richtungsinfomiation versehen werden (binauraler Richtungsmischer). Hierdurch gelingt es, durch entsprechende Einstellung der Filter, etwa verschiedenen Konferenzteilnehmern unterschiedliche Hörrichtungen zuzuordnen, was die Sprachverständlichkeit für hereinkommende Gesprächsteilnehmer, z.B. in störschallerfüllter Umgebung, erheblich verbessern kann.

Schließlich lässt sich der EP 0 358 028 eine digitale Zeitmultiplex-Fernmeldevermittlungsanlage entnehmen mit einem Sprachspeicher, der als Konferenzspeicher verwendet und um zusätzliche Speicherzellen erweitert ist. Dabei ist eine Rückführschleife vom Ausgang des Sprachspeichers zu dessen Eingang gelegt. Stereophone Gesichtspunkte sind nicht berücksichtigt.

Der Erfindung liegt die Aufgabe zugrunde, über das Medium einer dem Zweck angepassten stereophonen Telefonie eine insbesondere auch mobile Übertragung persönlicher dreidimensionaler Hörbilder in Echtzeit zu ermöglichen.

Die Erfindung löst diese Aufgabe mit den kennzeichnenden Merkmalen des Hauptanspruchs bzw. des ersten Vorrichtungsanspruchs und begründet damit ein neues Gebiet: die Übertragung persönlicher Hörbilder in Echtzeit.

Durch die binaurale Schallerfassung im Ohrenbereich jedes Gesprächteilnehmers ergeben sich so natürliche kopfbezogene Hörbilder, die der lebendigen Wirklichkeit in größter Annäherung entsprechen, d.h. jeder Teilnehmer nimmt jeweils über seine Kopf- oder Ohrhörer das kopfbezogene Umfeld wahr, in dem sich sein Gesprächspartner gerade befindet, einschließlich von dessen, sich in diesem und nur in diesem Umfeld auswirkenden Stimme, also, wie schon erwähnt, ausgestattet mit all den Reflexionen, Beugungen und Resonanzen, welche dieses Umfeld leistet oder beeinflusst. Nicht zuletzt deshalb ergibt sich auch die gute Sprachverständlichkeit, da genau das geleistet wird, woran die sprachverarbeitenden Hirnregionen jedes Menschen von Beginn der Sprachentwicklung an überhaupt gewöhnt und adaptiert sind, nämlich den vollen Klang der Sprache im Resonanz-, Beugungs- und Reflexionsspektrum der Umgebung und des eigenen Körpers wahrzunehmen und nicht den ausschnittfrequenzbehafteten, dünnen Klang bisher praktizierter telefonischer Sprachvermittlung.

Hierzu gehört im Grunde ein weiteres Phänomen, das darin besteht, dass es mit den Mitteln der Erfindung auch gelingt, die Wahrnehmung von Störgeräuschen deshalb wirksam zu unterdrückern, weil diese von dem jeweiligen, gerade hörenden Teilnehmer gut geortet werden und dadurch auch a priori als nicht zum Gespräch gehörend selektiert werden können. Auch dies ist eine spezielle Fähigkeit des menschlichen Gehörs bzw. Gehirns und zeigt sich eigentlich gerade bei dem in solchen Zusammenhängen gern erwähnten "Cocktail-Party-Effekt": trotz des durch die häufige Stimmenüberlagerung entstehenden Geräuschbreies sind Anwesende nahezu problemlos in der Lage, auch auf einige Entfernung genau den Sprecher herauszuhören und sich auf diesen zu konzentrieren, für den sie sich interessieren.

Die Wahrnehmung aller nicht derart selektierten anderen, auch gleichlaut oder sogar lauter eingehenden Schallereignisse werden ohne bewusstes Zutun unterdrückt bzw. auf eine nicht mehr das Verständnis erschwerende Ebene abgeschwächt. Unter Ausnutzung dieses natürlichen Phänomens erlaubt die Erfindung durch die Realisierung der teilnehmerkopfbezogenen binauralen Erfassung der räumlichen Umgebung, auch bei Konferenzschaltungen beliebiger Art, eine insofern natürliche Unterhaltung mit sofortiger Orientierung auf den jeweiligen Gesprächspartner.

Zur weiteren Vertiefung gerade dieses Aspektes der Erfindung sei darauf hingewiesen, dass es mittels einer hochwertigen binauralen Übertragung gelingt, den Teilnehmer auf der jeweils anderen Seite die eigene örtliche Klangwelt aus der eigenen, personenbezogenen Perspektive in allen wahrnehmbaren Klangfarben, Tonabfolgen und sonstigen räumlichen Merkmalen wie ein Hörspiel miterleben zu lassen, ob man sich nun in einem New Yorker Jazzkeller, beim Karneval in Rio oder an einem Strand mit Brandung und Mövengeschrei befindet.

Zu diesem Gesichtspunkt gehört auch die Möglichkeit, dem zu sendenden, das örtliche Klang- und Sprachgeschehen enthaltenden binauralen Stereo-Signal weitere eigene Klänge oder Tonfolgen zu unterlegen oder beizumischen, etwa in ihrer Dynamik abgeschwächte, die Unterhaltung nicht störende Musik, Songs oder was sich sonst auf dem mobilen Telefon oder speziellen "iPod", den man gerade für ein Gespräch benutzt, befindet. Soll die normalerweise ent- - stehende Im-Kopf-Lokalisation der zugemischten Audiosignale vermieden werden, kann zu diesem Zweck eine binaurale Richtungskodierung vorgesehen werden. Die Zusammenfassung solcher verschiedener Funktionen wie Telefon, MP3-Player, Rechner, Spielgerät u. dgl. in einem Kleinapparat sind ja heutzutage allgemeiner Stand der Technik und können auch bevorzugt bei vorliegender Erfindung eingesetzt werden.

Trotz der relativ hohen Anforderungen, die eine echtzeitfähige breitbandige binaurale Vollduplex-Verbindung an den drahtgebundenen oder drahtlosen Datentransfer stellt - sei es über leitungs- oder paketvermittelnde Netzstrukturen - ist bei geeigneter Wahl aus den heute vorhandenen Signal- und Kanalkodierungen beziehungsweise -dekodierungen und deren möglichen Implementierungen eine dem Erfindungszweck genügende Übertragungsqualität bei den heute verfügbaren Netzbandbreiten und Dienstgüten erzielbar. Die weiter oben erwähnten hochqualitativen Kommunikations-Verbindungen im Bereich der Rundfunk- und Studio-technik, welche sowohl über breitbandige drahtgebundene Netzstrukturen als auch mittels Punkt-zu-Punkt-Funkverbindungen oder unter Zuhilfenahme von Kanalbündelungsverfahren in Mobilfunknetzen drahtlos realisiert werden, sind hoch entwickelte Beispiele für das Vorhandensein der technischen Voraussetzungen zur Realisierung der binauralen Kommunikation im Sinne der vorliegenden Erfindung. Die so genannte Internet-Telefonie, deren inzwischen übliche Bezeichnung VoIP (voice-over-internet-protocol) lautet, ist eine besondere Anwendung der vorgehend erwähnten paketvermittelnden Netzstrukturen und kann einschließlich vorhandener Funkschnittstellen wie WiMax oder möglicher Nachfolger wie HiperLAN/2 bei entsprechender Dienstgüte Bestandteil der hier aufgeführten Strukturen und Verfahren für die angestrebte binaurale Echtzeit-Kommunikation sein.

Besondere, die erfinderischen Möglichkeiten erheblich potenzierende bzw. ausschöpfende Vorteile ergeben sich insbesondere aufgrund der durch die Maßnahmen des Unteranspruchs 2 gewährleisteten persönlichen Mobilität durch die Übertragung lebendiger persönlicher Hörbilder, die sich in ihrer mobilen Ausgestaltung und im personengebundenen Aufbau auf die ganze Vielfalt der realen Lebenssituationen erstrecken, statt sich auf die räumliche Umgebung eines Festnetzanschlusses oder bei entsprechend schnurloser Verbindung zu diesem, auf einen nur sehr engen Radius im Bereich eines solchen zu beschränken.

Gerade eine solche mobile Telefonie lässt sich in einem gewissen Sinn als das eigentliche oder jedenfalls als das breiteste Anwendungsgebiet bzw. Anwendungspotenzial einer binauralen Stereophonie verstehen; beide Technologien sind sowohl von der technischen Anordnung als auch von der praktischen Anwendung sozusagen füreinander bestimmt, was bisher auch im Nachhinein nirgendwo öffentlich erkannt worden ist. Durch die Verschmelzung einer mobilen Duplex-Verbindung in Echtzeit mit der binauralen Übertraguttgstechnologie lässt sich das heute immer stärker abzeichnende Konzept einer sog. "Telepräsenz" im akustischen Bereich mit großer Wirksamkeit realisieren.

Bezogen auf den Bereich der Konferenzschaltungstechnik, die allerdings nicht das Kerngebiet bzw. die Hauptanwendung der gegenwärtigen Erfindung ausmacht, hat diese den Vorteil, dass erstmals beide oder - im Falle von so genannten Konferenzschaltungen, gleichgültig ob diese nun von mehreren in einem gemeinsamen Raum befindlichen Teilnehmern zu einem oder weiteren Teilnehmern gehen oder von verschiedenen Orten ausgehen - sämtliche Teilnehmer in die Lage versetzt werden, Gespräche mit den jeweils anderen Teilnehmern so zu führen und auch zu empfangen, dass gerade auch im Falle des Auftretens mobiler Abläufe, sei es, dass die sprechende Person ihren Standort verändert oder ihr jeweiliges (akustisches) Umweltgeschehen sich ändert, wenn z.B. weitere Personen dazukommen, dabei das volle akustische, sich ändernde Geschehen, also die jeweilige aktuell akustische Perspektive, in ihrer ganzen Lebendigkeit übertragen wird. Es ergibt sich so der Eindruck, dass die jeweils hörende Person sich mit ihrem oder ihren Gesprächspartner(n) sozusagen im gleichen Raum befindet, also mit allen auch sonst bei einem aktiven, lebendigen, nicht zuletzt auch durch eine gewünschte Mobilität gekennzeichneten Gespräch einschließlich der dabei auftretenden, sich ändernden Reflexionen und Beugungsfunktionen, die auch normalerweise auftreten, wenn man mit einem Gegenüber in einer bestimmten Umgebung ein Gespräch führt und woran man ohnehin auf natürliche Weise gewöhnt ist.

Dadurch, aber auch, weil sich der Abstand der binaural aufnehmenden Mikrofone zum Mundbereich der jeweils sprechenden Person nicht verändert, bleiben die dynamischen Beziehungen unverändert, d.h. die Lautstärke braucht zumindest nicht durchgehend angepasst zu werden, so dass sich eine einwandfreie Sprachverständlichkeit hoher Qualität erzielen lässt, verglichen mit der auch heute noch ausschließlich praktizierten schmalbandigen, praktisch reinen. Sprachfrequenzübermittlung ohne die Lebendigkeit des natürlichen Raumes, den vielfältigen Beugungs-, Resonanz- und Reflexionsstruturen, die allein schon auf die Umgebung zurückzuführen sind, und schließlich auch die vom menschlichen Körper, also Oberkörper, Schulter, Kopf usw. erzeugten komplexen Überlagerungen, die sich dann schließlich zu der zweikanaligen, kopfbezogenen Übertragungsfunktion entsprechend der Erfindung zusammensetzen.

Durch die in den Unteransprüchen aufgeführten Maßnahmen sind vorteilhafte Weiterbildungen und Verbesserungen der im Hauptanspruch bzw. im ersten Vorrichtungsanspruch angegebenen stereophonen Telefonverbindung möglich.

### Zeichnungen

Ausführungsbeispiele der Erfindung sind in den Zeichnungen dargestellt und werden in der nachfolgenden Beschreibung näher erläutert. Es zeigen:
**Fig. 1** in schematischer Darstellung ein erstes Ausführungsbeispiel vorliegender Erfindung in Form einer stereophonen Telefonverbindung mit zwei Teilnehmern an unterschiedlichen Orten und
**Fig.2** ein zweites Ausführungsbeispiel der Erfindung, bei dem ein erster Teilnehmer über eine stereophone Telefonverbindung mit drei weiteren Teilnehmern, die sich gemeinsam an einem anderen Ort befinden, nach Art einer Konferenzschaltung in Verbindung steht.

### Beschreibung der Ausführungsbeispiele

Der Grundgedanke vorliegender Erfindung besteht darin, bei einer telefonischen Fernsprechverbindung, unabhängig davon, ob diese insgesamt über Kabel oder ganz oder auch nur teilweise drahtlos erfolgt, die wirkliche Umgebung jedes Gesprächsteilnehmers in Form kopfbezogener, persönlicher dreidimensionaler Hörbilder der jeweiligen Gegenseite, insbesondere auch bei mobiler Übertragung, zu vermitteln, wobei jeder Teilnehmer mindestens über ein binaurale Signale aufnehmenden Doppelmikrophonset und Stereo-Kopf- oder Ohrhörer verfügt.

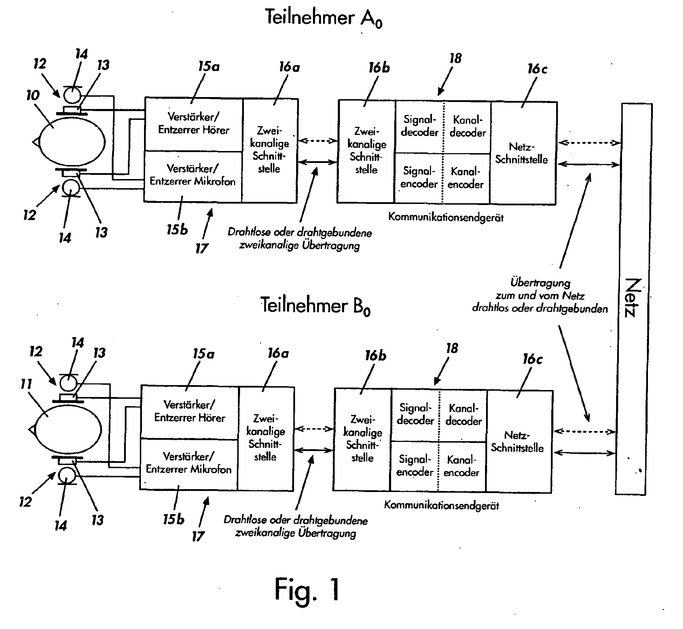

Fig. 1 zeigt, was gemeint ist. Teilnehmer Aₒ, dessen Kopf mit 10 bezeichnet ist, ist über eine stereophone Fernsprechverbindung mit Teilnehmer Bₒ mit Kopf 11 verbunden.

Jeder Teilnehmer Aₒ und Bₒ verfügt angrenzend zu seinen beiden Ohren oder auch innerhalb der Ohren, jedenfalls also im Ohrenbereich, über jeweils eine Kombination 12, bestehend aus jeweils einem elektrischen Schallgeber, üblicherweise also Kopf- oder Ohrhörer 13 und jeweils einem Mikrophon 14 zur dann insgesamt stereophonen Aufnahme bzw. Wiedergabe von Hörereignissen. Die Mikrophone 14 befinden sich deshalb angrenzend zu oder gegebenenfalls auch innerhalb der Ohrbereiche, damit sie zusammenwirkend stereophon genau die insofern als kopfbezogen bezeichneten Hörbilder aufzunehmen imstande sind, die auch die tatsächliche akustische Umgebung des Teilnehmers bilden. Es versteht sich, dass in geeigneter Weise für eine echo- und rückkopplungsfreie Verbindung oder Anordnung der Mikrophone mit Bezug auf die an dieser Stelle ebenfalls vorhandenen Schallgeber, also Ohr- oder Kopfhörer, Sorge zu tragen ist, damit der jeweilige Gesprächsteilnehmer nicht seine eigene Stimme wieder mit rückübertragen bekommt. Eine solche, eine Rückkopplungsfreiheit sicherstellende akustische Isolierung ist für den Fachmann problemlos zu realisieren.

Wie erwähnt, können die Schallgeber beliebiger Natur sein, z.B. supraaurale Kopfhörer oder vorzugsweise auch Ohrhörer, so dass auf kopfumspannende Trägeranordnungen verzichtet werden kann. Jedenfalls sind zur Verstärkung und Entzerrung der gewonnenen bzw. zu hörenden Signale den beiden Mikrophonen (d.h. dem einen Stereomikrophon) sowie den beiden Schallgebern 13 jeweils Verstärker/Entzerrerblöcke 15a für die Schallgeber und 15b für die Mikrophone nachgeschaltet, die auf eine zweikanalige Schnittstelle 16 arbeiten. Fasst man die jedem Teilnehmer zugeordneten Kombinationen 12 als eine erste Baugruppe auf, dann bilden die Verstärker-/Entzerrerschaltungen mit der zugeordneten Schnittstelle 16a eine zweite Baugruppe 17, die ihrerseits drahtlos oder drahtgebunden bei zweikanaliger Übertragung auf ein nachgeschaltetes Kommunikationsendgerät 18 geschaltet ist, das dann seinerseits, wiederum drahtlos oder drahtgebunden, die zweikanalige Signalübertragung zum Netz sicherstellt.

Unabhängig davon, ob äußere, also supraaurale offene oder auch geschlossene Kopfhörer oder Im-Ohr-Wiedergabesysteme verwendet werden, stets ergeben sich kopfbezogene, stereophone Telefoniesignale, die im Falle von Ohrhörer, an denen dann die Mikrophone befestigt oder sonst wie zugeordnet sind, sogar einen Teil der Ohrmuschel als Reflexions-, Beugungs- bzw. Resonanzkörper noch mitbekommen würden, was die Natürlichkeit der gesendeten Signale ergänzend verbessern würde.

Aufgrund der beträchtlichen Möglichkeiten, die heute und voraussichtlich auch zukünftig die immer weiter fortschreitende technische Entwicklung bezüglich Integration von Bauteilen und zunehmender Miniaturisierung bietet, ergibt sich ein besonderer Vorteil durch die Verwendung von Ohrhörern auch deshalb, weil sich in diesem Fall die miniaturisierten Kombinationen 12 jeweils von einem Ohrhörer und einem Mikrophon auch unter Verzicht auf drahtgebundene Zuleitungen und daher unterschiedlich zu den Darstellungen in der Zeichnung realisieren lassen; mit einer für Ohrhörer und Mikrophon gemeinsamen Versorgungsbatterie für jede Kombination 12 und einem gemeinsamen Ultra-Kurzstrecken-Sender zur nach geschalteten Baugruppe 17 ist ein bequemer und komfortabler Tragekomfort erreicht. Es baumeln keine Drahtverbindungen um den Kopf des Teilnehmers herum und bis auf die leicht in jedes Ohr gesteckten Kombinationen aus Mikrophon und Schallgeber ergeben sich keine Unannehmlichkeiten. Ohnehin wirken die Ohrhörer, wie jeder Benutzer eines MP3- Players, z. B. "iPod" weiß, besonders vorteilhaft im Sinne von sogenannten offenen Kopfhörern, die also den Benutzer gegenüber seiner akustischen Umwelt nicht abschließen, sondern jede gewünschte Art von Kommunikation ermöglichen.

An sich erklären sich die jeweiligen, in den Baugruppen 12, 17 und 18 enthaltenen Schaltungsblöcke aus den in der Zeichnung angegebenen Beschriftung für den Fachmann von selbst; die Entzerrerblöcke dienen einer Signalnormierung, die notwendig sein kann, wenn die jeweiligen Gesprächsteilnehmer unterschiedliche Headsets mit kabellosen Ohrsets aus Mikrophon und Ohrhörer arbeiten, um so mit den anderen Signalen eine Vergleichbarkeit zu erreichen. Dies kann auch eine Bedeutung haben, je nachdem, wo das Mikrophon sitzt, aber auch wegen der angestrebten Rückkopplungsfreiheit. So liefern die Entzerrer eine Kompensation, um letztlich auf eine nachgeschaltete Normschnittstelle zu kommen.

Für die sinnvolle oder gewünschte Trennung der einzelnen Baugruppen sind die Schnittstellen 16a, 16b, 16c in entsprechend hochwertiger zweikanaliger Ausbildung erforderlich, die drahtgebunden oder drahtlos, also durch Funk, auf die zugeordnete Schnittstelle der nachfolgenden Baugruppe arbeiten.

Grundsätzlich sei aber darauf hingewiesen, dass die in der Zeichnung getroffene Aufteilung und Zuordnung der verschiedenen Baugruppen bzw. Schaltungsblöcke hauptsächlich einem besseren Verständnis und der Anschaulichkeit erfindungsgemäßer Grundfunktionen dienen, es versteht sich, dass, nicht zuletzt auch aufgrund des jeweils erzielten technischen Fortschritts bzw. einer anderen Zweckmäßigkeit in Zuordnung und Ausbildung, auch eine andere Zusammenfassung von Schaltungsblöcken, sowie durchaus anders gestaltete und miteinander verbundene Signalverarbeitungs-schaltungen realisierbar sind und eingesetzt werden können.

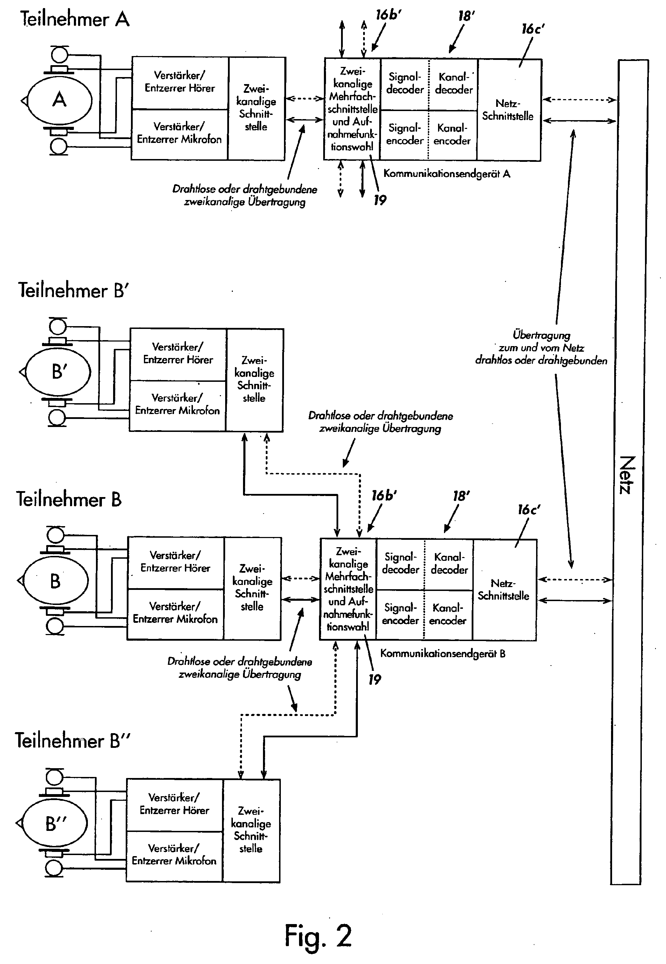

Fig. 2 zeigt eine vorteilhafte Ausgestaltung der Erfindung dahingehend, dass mindestens auf einer Seite mehrere Teilnehmer B, B', B" vorhanden sind, die sich in diesem Falle in einem gemeinsamen Raum befinden und wobei jeder der Teilnehmer B, B', B" einen Headset bzw. die Kombination 12 aus Mikrophon und Schallgeber an jedem Ohrbereich trägt, genauso wie der Gesprächsteilnehmer A, mit dem jeder Teilnehmer B, B', B" über das Netz zweikanalig verbunden ist. Zu diesem Zweck erfährt jedes der in Fig. 2 beteiligten Kommunikationsendgeräte 18' - auch im Bereich des Teilnehmers A könnten weitere Konferenzteilnehmer A', A" vorhanden sein -, eine Modifikation dahingehend, dass in der zweikanaligen Eingangsschnittstelle 16b' eine zusätzliche Aufnahmefunktionswahl-Schaltung 19 vorgesehen ist. Diese hat die Aufgabe, in einer ersten Variante selbsttätig zu entscheiden, welches Mikrophonpaar welches Gesprächsteilnehmers auf die ausgangsseitige Netzschnittstelle 16c' geschaltet und damit für die Übertragung durch das Netz freigegeben wird; das kann beispielsweise geschehen durch Erfassung der Dynamik der Sprachsignale, die von einem der Teilnehmer B, B', B" zu einem gegebenen Zeitpunkt erzeugt werden bzw. welcher der Teilnehmer überhaupt spricht. Die Aufnahmefunktionswahl-Schaltung sperrt dann die Mikrophon-Signalübertragung von den übrigen Teilnehmern, aber natürlich nicht die Tonsignalübertragung zu den einzelnen Schallgebern jedes weiteren Teilnehmers.

Hierzu gehört auch die Möglichkeit, dass die von der jeweils sprechenden Person ausgehenden Sprach- und Umgebungssignale über die Anlage, also auf elektrischem Wege zurück oder besser den Schallgebern der anderen, sich im gleichen Raum befindlichen weiteren Teilnehmern sozusagen ergänzend zugeführt werden, auch wenn diese die Sprachsignale über den Luftraum direkt hören können. Tatsächlich ist ja nicht auszuschließen, dass ein direktes Hören erschwerende oder infolge Abdichtung ganz verhindernde Schallgeber Verwendung finden.

Schweigt zu einem gegebenen Zeitpunkt der zunächst sprechende und entsprechend durchgeschaltete Teilnehmer hier der Dreierrunde, also z.B. Teilnehmer B, und ergreift ein anderer Teilnehmer, etwa B" das Wort, dann schaltet die Aufnahmefunktionswahl-Schaltung des Kommunikationsgeräts 18' Teilnehmer B" in dieser ersten Variante automatisch, also selbsttätig auf die Netzschnittstelle 16c'. Dies bedeutet allerdings nicht, dass Teilnehmer A am anderen Netzende notwendigerweise dann nur den jeweils zuletzt ausgeschalteten Konferenzteilnehmer wahrnehmen würde; tatsächlich hört er natürlich, wenn auch entsprechend den jeweiligen räumlichen Gegebenheiten in abgeschwächter Form, auch alle anderen Teilnehmer weiter über das Stereomikrophon von Teilnehmer B", so dass sich auch in diesem Fall das volle Stereopanorama im dreidimensionalen Raumklang für Teilnehmer A ergibt, praktisch so, als wenn er sich mit den Teilnehmern B, B', B" in einem gemeinsamen Raum befindet.

Es ist möglich, zusätzlich oder anstelle der automatischen Umschaltung diese manuell, also zur willkürlichen Betätigung auszulegen, so dass z.B. der Teilnehmer, der sich zu äußern wünscht, eine Schalttaste, die auch unmittelbar in seinem jeweiligen Zugriffsbereich angeordnet sein kann, betätigt und so von der Aufnahmefunktions-wahlschaltung auf das Netz geschaltet wird. Tasten zur Stummschaltung, wenn etwa eine diskrete Kurzbesprechnung geführt werden soll, können ebenfalls angeordnet werden.

Es ist ferner vorteilhaft, im Bereich der Aufnahmefunktions-Schaltung oder auch an sonst wie geeigneter Stelle eine Steuerungs- und Kontrollanzeige, Leuchtdioden oder dgl. anzuordnen, die anzeigt, welchen der Gesprächsteilnehmer die Aufnahmefunktionswahl-Schaltung 19 auf die ausgangsseitige Netzschnittstelle 16c' geschaltet hat. Da die sonstigen Schaltungskomponenten der Konferenzschaltungsvariante der Fig.2 den Schaltungsblöcken der Fig. 1 entsprechen, braucht hierauf nicht weiter eingegangen zu werden; auch ist von einer nochmaligen Bezugszeicheneinbindung der ohnehin mit ihren Funktionen in der Zeichnung angegeben schon weiter vorn besprochenen Schaltungsblöcke abgesehen worden.

Bezüglich der Signal- und Kanaldecoder beziehungsweise -encoder im Kommunikationsendgerät sei noch nachgetragen, dass die Signalde- und -encoder digital/analoge Wandlungen bzw. umgekehrt durchführen sowie Bandbreitenbestimmungen (Bandbreite der Signale liegt bei mindestens 3,4 kHz/8kHz/16kHz) vornehmen, ferner für möglichst geringe Gruppenlaufzeitunterschiede sorgen, wobei auch die Kohärenz zwischen den Kanälen bei der Codierung//Decodierung möglichst nicht verändert wird, während die Kanalde- und -encodierung das Gesamtsignal für das jeweilige Netz passend macht, wobei an dieser Stelle die Stereosignale und alle anderen Signale schon sozusagen in einem Signal verschachtelt sind. Ferner sorgen diese Kodierer und Dekodierer für die erforderliche Redundanz sowie für Fehlererkennung und -korrektur. Dabei liegen die Einweglaufzeiten inklusive Signalcodierung/-decodierung und Übertragung idealerweise im Bereich von kleiner als 120 Millisekunden, so dass eine zeitgerechte Signalübertragung ohne störende Verzögerungen gewährleistet ist.

Auf eine weitere vorteilhafte Ausgestaltung der Erfindung sei noch eingegangen, die darin besteht, ein zusätzliches Einzelmikrophon vorzugsweise in Nähe des Mundes jedes Gesprächs -teilnehmers anzuordnen, welches entweder - zur besseren Verständlichkeit beispielsweise - als eine Art Stützmikrophon dem Stereosignal beigemischt wird oder alternativ, das Stereo-signal des binauralen Mikrophonpaares auch völlig ersetzen kann. Man kehrt hierdurch zwar in den Bereich der konventionellen Monotelefonie über beibehaltende binaurale Kopfhörer zurück - könnte diese Möglichkeit aber einsetzen, wenn aus bestimmten Gründen, unter Umständen sogar von Anfang an, auf eine stereophone Übertragung von Umfeld-Informationen verzichtet wird, diese also nicht mehr für wichtig oder erwünscht gehalten wird, oder, z.B. im Laufe eines Gespräches, auf einen solchen Monobetrieb lediglich zur Durchgabe sprachlicher Aussagen auf beiden Seiten umgeschaltet zu werden wünscht. Hierdurch lassen sich natürlich auch Bandbreite für das zu übertragende Signal und entsprechende Kosten einsparen. Entsprechende Maßnahmen können problemlos in die vorhandene Softwarekonfiguration integriert werden, ergänzt durch eine einfache Schalterbetätigung von der Teilnehmerseite.

Es versteht sich, dass alle in der Beschreibung, den nachfolgenden Ansprüchen und insbesondere in der Zeichnung dargestellten Merkmale einzeln als auch in beliebiger Kombination miteinander erfindungswesentlich sein können.

## Patentansprüche

1. Verfahren zur stereophonen Aufnahme, Übertragung und Wiedergabe von Schallereignissen für Kommunikationsanwendungen in der Telefonie, wobei Kopfhörer für jeden Teilnehmer vorgesehen und Mikrophone vorhanden sind, **dadurch gekennzeichnet, dass** jedem Ohrbereich jedes Teilnehmers eine räumlich enge, jedoch rückkopplungsfrei verbundene Kombination aus jeweils einem Ohr- oder Kopfhörer und aus jeweils einem Mikrophon zugeordnet wird, wodurch die wirkliche, binaural aufgenommene auf den Kopf des jeweils aufnehmenden Teilnehmers in ihrem Reflexions-, Beugungs- und Resonanzverhaltens bezogene Umgebung in Form entsprechender stereophoner Klang- und Hörbilder an jeden anderen Teilnehmer über eine zweikanalige Verbindung übertragen wird.

2. Verfahren nach Anspruch 1, **dadurch gekennzeichnet, dass** die aus jeweils einer jedem Ohr zugeordneten Kombination bestehende Doppelkombination Teil einer mobilen, batteriebetriebenen telefonischen Empfangs- und Sendeanlage ist, die am Körper einer am Fernsprechverkehr teilnehmenden Person montiert oder getragen wird zur Übertragung jeweiliger persönlicher, kopfbezogener Hörbilder.

3. Verfahren nach Anspruch 1 oder 2, **dadurch gekennzeichnet, dass** im Falle von Konferenzschaltungen jeder sich in einem gleichen Raum aufhaltende Gesprächsteilnehmer entweder durch automatische Umschaltung, bewirkt durch den eigenen Gesprächsvorgang oder durch eine willkürlich betätigbare Umschaltung selektiv über eine Aufnahmefunktionsauswahl-Schaltung auf ein alle Gesprächsteilnehmer verbindendes Netz geschaltet wird.

4. Verfahren nach Anspruch 1, 2 oder 3, **dadurch gekennzeichnet, dass** bei mehreren, sich in einem gemeinsamen Raum befindlichen Teilnehmern einer Konferenzschaltung jedem dieser, im jeweiligen Moment nicht sprechenden Teilnehmern mindestens das Gesprächssignal ergänzend zu der natürlichen akustischen Raumübertragung über eine elektrische Rückführungsschleife, etwa im Kommunikationsgerät, auch ihren binauralen Kopf- oder Ohrhörern zugeführt wird.

5. Verfahren nach einem der Ansprüche 1 - 4, **dadurch gekennzeichnet, dass** ergänzend zu der stereophonen Umfeld- und Sprachübertragung je nach Wunsch von jedem Gesprächsteilnehmer Ton- und Klangfolgen die in dem jeweils benutzten stereophonen, auch mobilen Telefongerät gespeichert sind, mit übertragen werden.

6. Verfahren nach Anspruch 5, **dadurch gekennzeichnet, dass** zur Vermeidung einer im-Kopf-Lokalisation solcher zugemischter Audiosignale eine binaurale Richtungscodierung vorgenommen wird.

7. Vorrichtung zur Durchführung des Verfahrens nach einem oder mehreren der Ansprüche 1 bis 6, **dadurch gekennzeichnet, dass** zur Aufnahme Übertragung und Wiedergabe für jeden Ohrbereich eines Gesprächsteilnehmers (A, B; B', B") eine Kombination (12) aus jeweils einem Schallgeber (B" 13) und jeweils einem Mikrophon (14) vorgesehen ist, wobei bei jeder Kombination (12) Schallgeber und Mikrophon in enger räumlicher Beziehung zueinander unter Vermeidung von Echo- bzw. Rückkopplungserscheinungen angeordnet sind zur gleichzeitigen binauralen Aufnahme, Übertragung und Wiedergabe echter stereophoner Klang- und Hörbilder unter Einbeziehung des umfeld- und personenbezogenen Reflexions-, Beugungs- und Resonanzverhaltens.

8. Vorrichtung nach Anspruch 7, **dadurch gekennzeichnet, dass** die die binaurale Aufnahme und Wiedergabe ermöglichende Doppelkombination, gebildet aus jeweils einer aus einem Schallsender und einem Mikrophon an jedem Ohr jedes Fernsprechteilnehmers bestehenden Kombination, Teil einer mobilen telefonischen, batteriebetriebenen Anlage ist, die von jedem beteiligten Gesprächsteilnehmer getragen ist.

9. Vorrichtung nach Anspruch 7 oder 8, **dadurch gekennzeichnet, dass** zur zweikanaligen Weiterverarbeitung der binaural gewonnenen bzw. empfangenen Signale jeweils für Schallgeber und Mikrophone getrennt zweikanalige Verstärker/Entzerrerschaltungen (15a,15b), ferner Signal- und Kanal-decoder- und encoderschaltungen vorgesehen sind.

10. Vorrichtung nach Anspruch 7, 8 oder 9, **dadurch gekennzeichnet, dass** zwischen die einzelnen Signalverarbeitungsschaltungen je nach deren Zuordnung zueinander zweikanalige Schnittstellen (16a, 16b) sowie eine Netzendschnittstelle (16c) geschaltet sind, mit drahtloser oder drahtgebundener Übertragung zwischen den Schnittstellen bzw. zwischen Netzendschnittstelle und Netz.

11. Vorrichtung nach einem oder mehreren der Ansprüche 7 - 10, **dadurch gekennzeichnet, dass** im Falle von mehreren, in einem gemeinsamen Raum befindlichen Gesprächsteilnehmern eine zweikanalige Mehrfachschnittstelle (16b) vorgesehen ist, mit der die einzelnen Gesprächsteilnehmer, nach entsprechender Eigensignalaufbereitung, verbunden sind und dass eine Aufnahmefunktionswahl-Schaltung (19) vorgesehen ist zur automatischen oder willkürlichen betätigbaren Umschaltung aufgenommener Mikrophonsignale zur Weiterleitung ins Netz von einem der Gespächsteilnehmer (B) auf einen anderen (B', B").

12. Vorrichtung nach einem der Ansprüche 7 - 11 **dadurch gekennzeichnet, daß** einer ersten, die beiden Ohrbereichskombinationen (12) aus jeweils einem Mikrophon (14) und einem Kopf- oder Ohrhörer (13) umfassenden Schaltungsgruppe eine zweite, aus Verstärker/Entzerrerblöcken für Hörer bzw. Mikrophon bestehende Schaltungsgruppe (17) nachgeschaltet ist, die mit einem nachgeschalteten Kommunikationsendgerät (18) über beidseitige zugeordnete zweikanalige Schnittstellen (16a, 16b) drahtlos oder drahtverbunden verbunden ist, wobei das Kommunikationsendgerät (18) Signalde- und - encoder sowie Kanalde- und -encoder sowie im Falle von Konferenzschaltungen zu einer eingangsseitigen Mehrfach-Schnittstelle (16b') eine Aufhahmefunktionswahlschaltung (19) mit Steuerungs- und Kontrollanzeige zur automatischen oder willkürlich betätigbaren Aufschaltung des jeweils sprechenden Gesprächsteilnehmers auf das Fernsprechnetz umfasst.

13. Vorrichtung nach einem oder mehreren der Ansprüche 7 - 12, **gekennzeichnet durch** eine Schaltungsanordnung, **durch** die sich die stereophone Kommunikation zu einem gewünschten Zeitpunkt beidseitig auf Monobetrieb umschalten lässt.

14. Vorrichtung nach einem oder mehreren der Ansprüche 7 - 13, **gekennzeichnet durch** ein drittes, mundnahes Stützmikrophon zur bedarfsgerechten Sprachbeimischung zum übertragenen Stereosignal oder zur Ermöglichung des Monobetriebs nach Anspruch 13.

## Claims

1. Method for stereophonic capturing, transmitting and reproduction of sound events for communication applications in telephony, in which headphones are provided for each participant and microphones are available, **characterised in that** a spatially narrow but feedback-free connected combination of one ear or head phone each and of one microphone each is assigned to each ear area of each participant, by means of which the actual and binaurally recorded environment relating to the head of each capturing participant in its reflection, diffraction and resonance behaviour, is transmitted to each other participant via a two-channel connection In the form of corresponding stereophonic sound and acoustic Images.

2. Method as per claim 1, **characterised in that** the double combination consisting each time of a combination assigned to each ear, is part of a mobile battery-operated telephonic receiver and transmitter station which is mounted or carried on the body of a person participating in the telephone traffic, for transmitting the respective personal and head-related acoustic Images.

3. Method as per claim 1 or 2, **characterised in that**, in case of conference circuits, each participant to the call staying In the same room is switched selectively to a network connecting all participants to the call via a capturing function selection circuit, either by means of an automatic switchover, generated by the own calling process, or by an arbitrarily operable switchover.

4. Method as per claims 1. 2, or 3, **characterised In that**, in case of several participants to a conference circuit staying in a common room, in addition to the natural acoustic spatial transmission, at least the call signal is fed also to the binaural head or ear phones of each one ofthose participants who are not calling at the respective moment, via an electrical feedback loop, possibly located in the communication device.

5. Method as per one of claims 1-4, **characterised In that**, in addition to the stereophonic environment and speech transmission, tone and sound sequences emanating from each participant to the call, which are stored in the stereophonic or mobile telephone device used each time, are transmitted simultaneously, as required.

6. Method as per claim 5, **characterised in that** a binaural encoding of directions is carried out to avoid in-head localisation of such admixed audio signals.

7. Apparatus for conducting the method as per one or more of claims 1 to 6, **characterised In that** a combination (12) consisting of a sound generator (13) and a microphone (14) each are provided for capturing, transmitting, and reproduction, for each ear area of a participant to the call (A, B; B', B"), in which in each combination (12), the sound generator and microphone are arranged between themselves In a narrow spatial correlation to avoid echo or feedback phenomena, for the simultaneous binaural capturing, transmitting, and reproduction of true stereophonic sound and acoustic images, by including the reflection, diffraction and resonance behaviour in relation to environment and persons.

8. Apparatus as per claim 7, **characterised In that** the double combination allowing for binaural capturing and reproduction, formed each time by a combination consisting of a sound generator and a microphone at each ear of each participant to the long distance call, is part of a mobile telephonic battery-operated station carried by each concerned participant to the call.

9. Apparatus as per claim 7 or 8, **characterised in that**, for the two-channel processing of the signals gained or received binaurally, two-channel amplifiers / equalising circuits (15a, 15b) and also signal circuits and channel decoder and encoder circuits are provided, each time separately for the sound generators and the microphones.

10. Apparatus as per claims 7, 8, or 9, **characterised in that** two-channel interfaces (16a, 16b) and a network end Interface (16c) are switched between the individual signal processing circuits, depending on their allocation to each other, featuring a wireless or wire-bound transmission between the interfaces or between the network end Interface and the net.

11. Apparatus as per one or more of claims 7 - 10, **characterised in that**, in case of several participants to a call staying in a common room, a two-channel multiple interface (16b) is provided to which the individual participants to the call are connected, following appropriate self-signal processing, and that a capturing function selection circuit (19) is provided for an automatic or arbitrarily operable switchover of recorded microphone signals for routeing to the network from one of the participants to the call (B) to another one (B', B"),

12. Apparatus as per one of claims 7 - 11, **characterised In that** to a first circuit group encompassing the two ear area combinations (12) consisting each of a microphone (14) and a head or ear phone (13), a second circuit group (17) is installed downstream, consisting of amplifiers / equalising circuits for the receiver or the microphone, which is connected in a wireless or wire-bound manner to a communication end device (18) installed downstream, via two-channel interfaces (16a, 16b) assigned to both sides, in which the communication end device (18) encompasses signal decoders and encoders and channel decoders and encoders, and, In the case of conference circuits, In addition to a multiple interface (16b') on the input side, a capturing function selection circuit (19) with control and monitoring display for automatic or arbitrarily operable circuit-entering of the participant to the call speaking each time, to the telephone network.

13. Apparatus as per one or more of claims 7 - 12, **characterised by** a circuit arrangement by means of which the stereophonic communication can be switched over to mono operation on both sides at any chosen moment.

14. Apparatus as per one or more of claims 7 - 13, **characterised by** a third adoral spot microphone for the admixture of speech as per requirements in addition to the stereo signal transmitted or to allow for mono operation as per claim 13.

## Revendications

1. Dispositif permettant le captage, la transmission et la reproduction stéréophonique d'événements sonores pour des utilisations de communication dans le domaine de la téléphonie, des casques à écouteurs pour chaque participant et des microphones étant prévus,
**caractérisé en ce qu'**
à chaque domaine de sensation auriculaire de chaque participant est associée une combinaison spatialement étroite mais reliée en étant exempte de rétroaction constituée respectivement par un écouteur ou un casque à écouteurs et un microphone, par laquelle l'environnement effectif reçu de façon binauriculaire au niveau de la tête de chaque participant au captage relatif à son comportement de réflexion, de diffraction et de résonnance est transmis sous la forme d'images sonores et acoustiques stéréophoniques à chacun des autres participants par l'intermédiaire d'une liaison à deux canaux.

2. Procédé conforme à la revendication 1,
**caractérisé en ce que**
la combinaison double respectivement constituée par une combinaison associée à chaque oreille est une partie d'une installation de captage et d'émission téléphonique mobile actionnée par batterie qui est montée ou portée sur le corps d'une personne participant à l'ensemble de communications téléphoniques pour la transmission de chaque image auditive personnelle captée au niveau de sa tête.

3. Procédé conforme à la revendication 1 ou 2,
**caractérisé en ce que**
dans le cas de circuit de conférence, chaque participant à la conversation téléphonique retenu dans un même local est sélectivement branché par l'intermédiaire d'un circuit de sélection de fonction de captage sur un réseau reliant tous les participants à la conversation, soit par l'intermédiaire d'une commutation automatique effectuée par le processus de conversation propre, soit par l'intermédiaire d'une commutation actionnable arbitrairement.

4. Procédé conforme à la revendication 1, 2 ou 3,
**caractérisé en ce qu'**
en présence de plusieurs participants à un circuit de conférence se trouvant un local commun, pour chacun de ces participants ne parlant pas à un moment respectif, est également transmis à son casque à écouteurs binauriculaires ou à ses écouteurs, au moins le signal conversation, complété par la transmission locale acoustique naturelle, par l'intermédiaire d'une boucle de rétroaction électrique, notamment dans l'appareil de communication.

5. Procédé conforme à l'une des revendications 1 à 4,
**caractérisé en ce qu'**
en complément de la transmission stéréophonique de l'environnement et de la conversion sont également transmises selon le souhait de chaque participant à la conversion, des successions de tonalités et de sonorités qui sont enregistrées dans l'appareil téléphonique stéréophonique également mobile respectivement utilisé.

6. Procédé conforme à la revendication 5,
**caractérisé en ce que**
pour éviter une localisation au niveau de la tête de tels signaux audio mixtes ou effectue un codage d'orientation binauriculaire.

7. Dispositif permettant la mise en oeuvre du procédé conforme à l'une ou plusieurs des revendications 1 à 6,
**caractérisé en ce que**
pour permettre le captage, la transmission et la reproduction pour chaque domaine de sensation auriculaire d'un participant à une conversation (A, B, B', B") il est prévu une combinaison (12) respectivement constituée d'un émetteur sonore (13) et d'un microphone (14), et, dans chaque combinaison (12) l'émetteur sonore et le microphone sont montés en relation spatialement étroite l'un par rapport à l'autre en évitant les phénomènes d'écho et de rétroaction pour permettre le captage, la transmission et la reproduction binauriculaire simultanées d'images sonores et auditives stéréophoniques réelles avec intégration du comportement de réflexion de diffraction et de résonnance lié à l'environnement et à la personne.

8. Dispositif conforme à la revendication 7,
**caractérisé en ce que**
la double combinaison permettant le captage et la reproduction binauriculaire respectivement formée d'une combinaison constituée d'un émetteur sonore et d'un microphone sur chaque oreille de chaque participant à la conversation téléphonique est une partie d'une installation téléphonique mobile commandée par batterie qui est portée par chaque participant à la conversation.

9. Dispositif conforme à la revendication 7 ou 8,
**caractérisé en ce que**
pour le traitement ultérieur en deux canaux des signaux binauriculaires produits ou reçus, il est respectivement prévu, séparément pour chaque émetteur sonore et pour chaque microphone, des amplificateurs/circuits compensateurs d'atténuation (15a, 15b) et en outre des circuits décodeurs et codeurs de signaux et de canaux.

10. Dispositif conforme à la revendication 7, 8 ou 9,
**caractérisé en ce qu'**
entre les différents circuits de traitement de signaux, sont branchés, respectivement en fonction de leur affectation les uns par rapport aux autres, des interfaces à doubles canaux (16a, 16b) ainsi qu'une interface de fin de réseau (16c) avec une transmission sans fil ou par fils avec les interfaces ou entre l'interface de fin de réseau et le réseau.

11. Dispositif conforme à l'une ou plusieurs des revendications 7 à 10,
**caractérisé en ce que**
lorsque plusieurs participants à une conversation téléphonique se trouvent dans un local commun il est prévu une interface multiple (16b) à deux canaux avec laquelle les différents participants à la conversation téléphonique sont reliés, après une préparation de signal propre correspondante, et il est prévu un circuit de sélection de fonction de captage (19) permettant la commutation pouvant être actionnée automatiquement ou arbitrairement de signaux de microphone reçus pour les transmettre ultérieurement dans le réseau de l'un des participants à la conversation téléphonique (B) à un autre (B', B").

12. Dispositif conforme à l'une des revendications 7 à 11,
**caractérisé en ce qu'**
en aval d'un premier groupe de circuit renfermant deux combinaisons de domaine de sensation auriculaire (12) respectivement constituées d'un microphone (14) et d'un casque à écouteurs ou d'écouteurs (13) est monté un second groupe de circuit (17) constitué par des blocs amplificateurs/compensateurs d'atténuation pour les écouteurs ou le microphone, et relié à un appareil de fin de communication (18) monté en aval, par l'intermédiaire d'interfaces (16a, 16b) à deux canaux associés de part et d'autre, par une liaison sans fil ou par fils, l'appareil de fin de communication (18) renfermant des codeurs et des décodeurs de signal, et des codeurs et des décodeurs de canal, ainsi que dans le cas de circuits de conférence vers une interface multiple côté entrée, un circuit de sélection de fonction de captage (19) avec une indication de commande et de contrôle pour la commutation, actionnable de façon automatique ou arbitraire du participant à la conversation téléphonique prenant la parole sur le réseau de communication téléphonique.

13. Dispositif conforme à l'une ou plusieurs des revendications 7 à 12,
**caractérisé par**
une installation de circuit par laquelle la communication stéréophonique peut être commutée de part et d'autre à un instant souhaité sur un fonctionnement monophonique.

14. Dispositif conforme à l'une ou plusieurs des revendications 7 à 13,
**caractérisé par**
un troisième microphone d'appui situé à proximité de la bouche pour permettre en cas de besoin l'addition de parole au signal stéréo transféré ou pour permettre le fonctionnement en monophonie conforme à la revendication 13.
